# FASCICULE DE BREVET EUROPEEN

(11) **EP 3 585 030 B1**
(45) Date de publication et mention de la délivrance du brevet: **16.11.2022**
(21) Numéro de dépôt: 19175517.2
(22) Date de dépôt: 21.05.2019
(51) Int. Cl.: H04L 9/40, H04B 7/185

(54) **SYSTÈME ET PROCÉDÉ DE COMMUNICATION D'UN AÉRONEF**
KOMMUNIKATIONSSYSTEM UND -VERFAHREN EINES LUFTFAHRZEUGS
AIRCRAFT COMMUNICATION SYSTEM AND METHOD

(30) Priorité: 19.06.2018 FR 1855363
(43) Date de publication de la demande: 25.12.2019
(73) Titulaire: AIRBUS OPERATIONS (S.A.S.), 31060 Toulouse (FR); Airbus Operations GmbH, 21129 Hamburg (DE)
(72) Inventeur: LECONTE, Bertrand, 31060 TOULOUSE Cedex 9 (FR); ATTAL, Pierre, 31060 TOULOUSE Cedex 9 (FR); MARWEDEL, Stephan, 21129 HAMBURG (DE); BISCHOF, Olaf, 21129 HAMBURG (DE)
(74) Mandataire: Sarraméa, Claude

(56) Documents cités:
- EP-A1- 1 296 252
- EP-A1- 1 296 252
- EP-A2- 2 428 911
- US-A1- 2011 218 701

## Description

La présente invention concerne un système et un procédé de communication d'un aéronef, ainsi qu'un aéronef comportant un tel système de communication. Les aéronefs modernes, en particulier les avions de transport, comportent des calculateurs avioniques permettant d'aider le pilotage de l'aéronef par les membres d'équipage. Par exemple, un aéronef comporte généralement un calculateur de gestion de vol de type FMS (« Flight Management System » en anglais), un calculateur de guidage de type FG (« Flight Guidance » en anglais), un calculateur de commandes de vol de type FCS (« Flight Control System » en anglais) ou de types PRIM (« Primary computer » en anglais) et SEC (« Secondary computer » en anglais), etc. Les fonctions mises en œuvre par les calculateurs avioniques pouvant être essentielles pour le vol de l'aéronef, il est prévu une redondance des différents calculateurs avioniques afin de garantir une disponibilité desdites fonctions conforme aux réglementations en vigueur. Afin de mettre en œuvre les différentes fonctions pour lesquelles ils sont prévus, ces calculateurs avioniques échangent entre eux des informations grâce à un réseau de communication de l'aéronef. Les calculateurs avioniques et ce réseau de communication font ainsi partie d'un système de communication de l'aéronef. Sur les aéronefs modernes, ce système de communication comprend généralement d'autres calculateurs que les calculateurs avioniques : il comprend notamment des calculateurs mettant en œuvre des fonctions relatives à la compagnie aérienne exploitant l'aéronef, en particulier un calculateur de maintenance, par exemple de type CMS (« Centralized Maintenance System » en anglais), ou un calculateur de gestion de la cabine passagers. Les fonctions mises en œuvre par ces autres calculateurs sont des fonctions non-essentielles, au moins à court terme, pour le vol de l'aéronef. Les calculateurs avioniques sont regroupés dans un domaine dit domaine avionique auquel correspond un niveau de sécurité (« security level » en anglais) requis le plus élevé du système de communication de l'aéronef afin de garantir que le fonctionnement des fonctions mises en œuvre par les calculateurs avioniques ne risque pas d'être perturbé, de façon volontaire ou involontaire, par des communications avec des équipements extérieurs au domaine avionique. Le niveau de sécurité requis pour les autres calculateurs est moins élevé que le niveau de sécurité requis pour le domaine avionique. Le système de communication est par exemple conforme au standard ARINC 811 qui définit différents domaines ayant des niveaux de sécurité différents dans un système de communication d'un aéronef, en particulier :
- un domaine ACD (« Aircraft Control Domain » en anglais) correspondant au domaine avionique précité ;
- un domaine AISD (« Airline Information Services Domain » en anglais) comprenant des calculateurs mettant en œuvre les fonctions relatives à la compagnie aérienne (maintenance, gestion de la cabine, etc.) ;
- un domaine PIESD (« Passenger Information and Entertainement Services Domain » en anglais) relatif au divertissement et à l'information des passagers.

Conformément au standard ARINC 811, le niveau de sécurité du domaine ACD correspond à un niveau de sécurité le plus élevé du système de communication de l'aéronef car les fonctions mises en œuvre par les calculateurs du domaine ACD peuvent être essentielles pour le contrôle du vol de l'aéronef. Le niveau de sécurité du domaine AISD est moins élevé que celui du domaine ACD, les fonctions mises en œuvre dans le domaine AISD étant moins essentielles, au moins à court terme, pour le contrôle du vol de l'aéronef. Le niveau de sécurité du domaine PIESD est moins élevé que le niveau de sécurité du domaine AISD.

L'échange d'informations d'un domaine ayant un niveau de sécurité moins élevé vers un domaine ayant un niveau de sécurité plus élevé est très fortement restreint afin de ne pas compromettre la sécurité du domaine ayant le niveau de sécurité le plus élevé. En particulier, le transfert d'informations du domaine AISD vers le domaine ACD est fortement restreint afin de ne pas compromettre la sécurité du domaine ACD. Par exemple, lorsque l'aéronef reçoit, dans le domaine AISD, une demande de mise à jour d'un plan de vol de l'aéronef provenant de la compagnie aérienne exploitant l'aéronef, afin de garantir la sécurité du domaine ACD, la mise à jour du plan de vol ne peut pas être transmise de façon automatique du domaine AISD vers un calculateur de gestion de vol de type FMS situé dans le domaine ACD. Si le pilote souhaite appliquer cette mise à jour, il doit saisir un plan de vol modifié en conséquence au moyen d'une interface homme-machine du domaine ACD reliée au calculateur de gestion de vol FMS. Cela représente une charge de travail pour le pilote de l'aéronef. Afin de réduire la charge de travail du pilote, il serait souhaitable de permettre la transmission vers le domaine avionique (ou ACD), dont le niveau de sécurité est le plus élevé dans le système de communication, d'informations provenant d'un domaine ayant un niveau de sécurité moins élevé, cela tout en ne compromettant pas la sécurité du domaine avionique.

Le document US2011/218701A1 est relatif à la configuration d'un système d'information de maintenance embarqué dans un aéronef. Le système comprend deux interfaces de communication, un domaine protégé et un domaine de maintenance. Ces domaines comprennent chacun des fonctions de maintenance et un module de filtrage de données. Un terminal mobile de maintenance peut être connecté au système d'information. Les modules de filtrage sont configurés pour filtrer les données échangées entre le terminal mobile de maintenance et les fonctions de maintenance.

Le document EP2 428 911 A2 est relatif à la sécurisation des transferts d'informations vers un aéronef, en particulier par un procédé d'authentification.

### EXPOSE DE L'INVENTION :

La présente invention a pour objet de remédier aux inconvénients précités.

La présente invention est définie par l'objet des revendications indépendantes. Modes de réalisation préférés sont définis par les revendications dépendantes.

### DESCRIPTION DETAILLEE :

L'invention sera mieux comprise à la lecture de la description qui suit et à l'examen des figures annexées.
Les figures 1 et 2 représentent schématiquement un système de communication d'un aéronef conforme à deux modes de réalisation de l'invention.
La figure 3 illustre de façon simplifiée un aéronef comportant un tel système de communication.

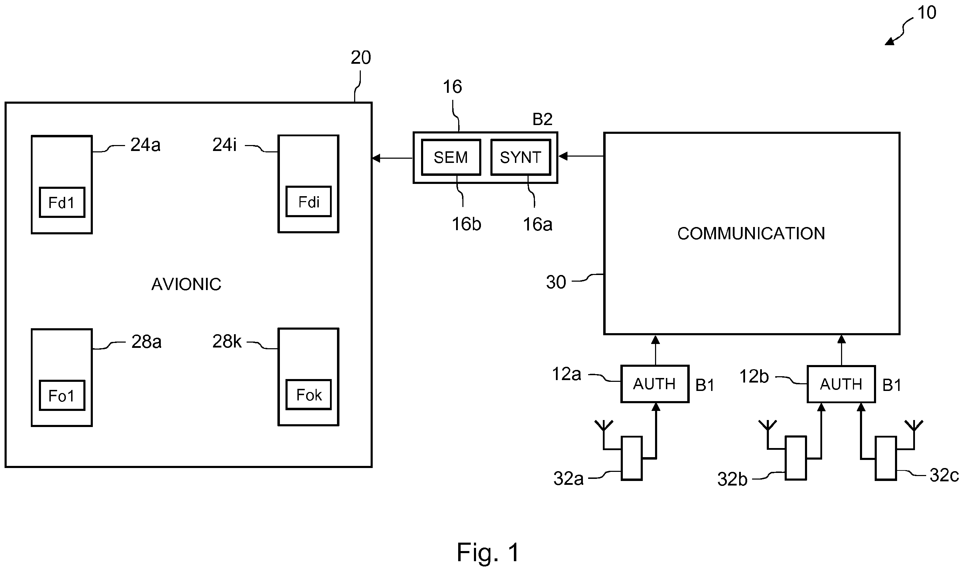

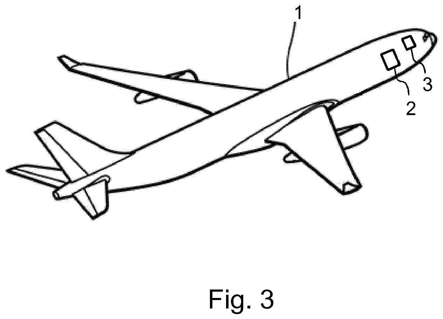

Un aéronef 1, représenté sur la figure 3, comporte un système de communication. Ce système de communication 10, tel que représenté sur la figure 1, comporte un domaine avionique 20 (libellé AVIONIC sur la figure), un domaine de communication 30 (libellé COMMUNICATION sur la figure), un ensemble d'interfaces de communication 32a, 32b, 32c, un ensemble de barrières 12a, 12b d'un premier type (libellées B1 sur la figure) et une barrière 16 d'un deuxième type (libellée B2 sur la figure). Le domaine avionique 20 comprend un ensemble de calculateurs 24a ... 24i, 28a ... 28k configurés pour mettre en œuvre un ensemble de fonctions respectives Fd1 ... Fdi, Fo1 ... Fok. Bien qu'une seule fonction soit représentée pour chaque calculateur pour des raisons de clarté de la figure, chaque calculateur peut mettre en œuvre un ensemble de fonctions. Les interfaces de communication 32a, 32b, 32c correspondent par exemple à des unités d'émission et de réception de données prévues pour permettre des liaisons de données entre l'aéronef et le contrôle aérien ou des centres d'exploitation de la compagnie aérienne exploitant l'aéronef. Ces interfaces de communication sont reliées en sortie à des entrées des barrières du premier type, lesquelles sont reliées en sortie au domaine de communication 30. Par exemple, comme représenté sur la figure, une sortie de l'interface de communication 32a est reliée à une entrée de la barrière 12a du premier type, dont une sortie est reliée au domaine de communication 30. De même, une sortie de l'interface de communication 32b et une sortie de l'interface de communication 32c sont reliées à des entrées de la barrière 12b du premier type, dont une sortie est reliée au domaine de communication 30. Le système de communication 10 est par exemple localisé dans une baie avionique 2 de l'aéronef.

Le domaine avionique 20 est un domaine auquel correspond un niveau de sécurité le plus élevé du système de communication 10. Le domaine de communication 30 est un domaine auquel correspond un niveau de sécurité moins élevé que le niveau de sécurité du domaine avionique.

En fonctionnement, les interfaces de communication 32a, 32b, 32c sont susceptibles de recevoir des informations provenant par exemple du contrôle aérien ou d'un centre opérationnel de la compagnie aérienne exploitant l'aéronef. En considérant par exemple la réception de telles informations par l'interface de communication 32a, ladite interface de communication 32a transmet les informations qu'elle reçoit vers la barrière 12a du premier type. Cette barrière 12a est une barrière d'authentification, comme représenté par le libellé AUTH sur la figure. Elle correspond par exemple à une passerelle (« Gateway » en anglais) ou à un routeur. La barrière 12a est configurée pour laisser entrer lesdites informations dans le domaine de communication 30 seulement si ces informations correspondent à une communication authentifiée. Pour cela, la barrière 12a du premier type peut utiliser toute technique connue dans le domaine de l'authentification des communications, par exemple un identifiant et un mot de passe, un code de redondance cyclique, un certificat numérique, etc. Si les informations ne correspondent pas à une communication authentifiée, la barrière 12a ne laisse pas entrer ces informations dans le domaine de communication 30. Si les informations reçues correspondent à une communication authentifiée, la barrière 12a transmet ces informations vers le domaine de communication 30.

Dans le domaine de communication 30, un équipement (par exemple un routeur) ou un ensemble d'équipements reçoit les informations issues de l'interface de communication 32a via la barrière 12a. Cet équipement vérifie si ces informations sont destinées à un calculateur (ou à des calculateurs) du domaine avionique. Si tel est le cas, cet équipement transmet ces informations vers la barrière 16 du deuxième type. La barrière 16 réalise au moins un filtrage syntaxique 16a desdites informations, comme représenté par le libellé SYNT sur la figure. Lors du filtrage syntaxique, la barrière 16 vérifie si la syntaxe des informations correspond à une syntaxe prédéfinie à laquelle sont censées être conformes ces informations. Si les informations ne sont pas conformes à cette syntaxe prédéfinie, la barrière 16 ne les transmet pas au domaine avionique. Si les informations sont conformes à cette syntaxe prédéfinie, la barrière 16 les transmet au domaine avionique. La syntaxe prédéfinie correspond par exemple à un format particulier de trames de données correspondant à ces informations. Ainsi, grâce à l'invention, des informations reçues pas l'aéronef en provenance d'une source extérieure à l'aéronef ne peuvent entrer dans le domaine avionique qu'après avoir franchi une barrière 12a, 12b, 12c du premier type, puis la barrière 16 du deuxième type. Cela suppose que ces informations soient transmises au moyen d'une communication authentifiée et qu'elles soient conformes à la syntaxe prédéfinie : par conséquent, la source des informations est habilitée à communiquer avec l'aéronef et elle respecte la syntaxe des informations, ce qui garantit un niveau de confiance en ces informations compatible avec leur utilisation dans le domaine avionique afin de ne pas compromettre le niveau de sécurité du domaine avionique.

Dans un mode avantageux de réalisation, la barrière 16 réalise en outre un filtrage sémantique 16b des informations, comme représenté par le libellé SEM sur la figure. Ce filtrage sémantique correspond à une vérification de la conformité de valeurs desdites informations, par rapport à des plages de valeurs prédéfinies, autorisées pour ces informations. Par exemple, lorsqu'une information correspond à une destination de l'aéronef, une plage de valeurs autorisées peut correspondre à une liste d'aéroports autorisés. Lorsqu'une information correspond à une altitude de croisière de l'aéronef, une plage de valeurs autorisées peut correspondre à un intervalle d'altitudes de croisière, par exemple [25000ft - 35000ft] (soit environ 7500m - 11500m). De préférence, les plages de valeurs autorisées sont prédéfinies de façon à préserver la sécurité (« safety » en anglais) du vol de l'aéronef. Dans les exemples précités, ces plages de valeurs sont par exemple choisies de façon à éviter une destination de l'aéronef ne correspondant pas à un aéroport connu ou de façon à éviter une altitude de croisière de l'aéronef non conforme avec les routes aériennes connues. Si les informations reçues par la barrière 16 ne sont pas conformes avec les plages de valeurs autorisées, la barrière 16 ne les transmet pas au domaine avionique. Si ces informations sont conformes avec les plages de valeurs autorisées, la barrière 16 les transmet au domaine avionique. Ce filtrage sémantique permet de garantir que les informations reçues par le domaine avionique ne risquent pas de compromettre la sécurité (« safety » en anglais) du vol de l'aéronef puisque des informations qui ne respecteraient pas les plages de valeurs autorisées seraient bloquées par la barrière 16.

Selon l'invention le domaine avionique 20 comprend au moins un équipement avionique 24a ... 24i, 28a ... 28k dont une fonction Fd1 ... Fdi, Fo1 ... Fok est configurée pour réaliser une analyse sémantique d'informations reçues par ladite fonction, en particulier en provenance du domaine de communication 30. Cette fonction correspond à une fonction de gestion de l'aéronef. Cette analyse sémantique correspond à une acceptation ou à un refus des informations reçues par ladite fonction, en fonction d'une part de valeurs desdites informations et d'autre part d'un contexte de l'aéronef. Lorsque les informations reçues par une fonction de navigation de l'aéronef (faisant en particulier partie d'un calculateur FMS de gestion du vol de l'aéronef) correspondent à une destination souhaitée de l'aéronef, la fonction prend en compte un contexte de l'aéronef pour accepter ou refuser ces informations. Dans ce cas particulier, le contexte correspond par exemple à une position courante de l'aéronef et à une quantité courante de carburant disponible à bord de l'aéronef. Si les informations reçues correspondent à une destination de l'aéronef compatible avec la quantité courante de carburant disponible à bord de l'aéronef, la fonction de navigation accepte ces informations reçues. A contrario, si ces informations correspondent à une destination de l'aéronef qui nécessiterait pour l'atteindre une quantité de carburant supérieure à la quantité courante de carburant disponible à bord de l'aéronef, la fonction de navigation refuse ces informations afin de préserver la sécurité (« safety » en anglais) du vol de l'aéronef. Dans un autre exemple, les informations reçues par une fonction de navigation de l'aéronef correspondent à un plan de vol modifié de l'aéronef. Le contexte correspond alors par exemple, au moins en partie, au relief du terrain correspondant à ce plan de vol modifié. Ce relief est par exemple enregistré dans une base de données de terrain embarquée dans l'aéronef. La fonction de navigation vérifie alors si le plan de vol modifié peut être volé sans que l'aéronef risque d'entrer en contact avec le relief correspondant. Si tel est le cas, la fonction de navigation accepte les informations reçues. Sinon, s'il existe un risque que l'aéronef entre en contact avec le relief du terrain, la fonction de navigation refuse ces informations.

Dans un exemple d'utilisation d'un système de communication 10 conforme à ce mode de réalisation, un centre opérationnel au sol d'une compagnie aérienne exploitant l'aéronef 1 souhaite transmettre un plan de vol modifié à l'aéronef 1. Pour cela, le centre opérationnel transmet ce nouveau plan de vol vers l'aéronef au moyen d'une liaison de communication authentifiée. Les informations correspondant à ce nouveau plan de vol sont par exemple reçues par l'interface de communication 32a. La barrière 12a vérifie que la liaison de communication est bien authentifiée et elle ne laisse entrer ces informations dans le domaine de communication que si la liaison de communication est authentifiée. Cela permet de garantir que les informations proviennent bien d'un émetteur habilité à communiquer avec l'aéronef pour lui envoyer ces informations. Une fois les informations reçues dans le domaine de communication 30, elles sont envoyées vers la barrière 16 du deuxième type en vue de les transmettre vers le domaine avionique. La barrière 16 réalise un filtrage syntaxique 16a qui permet de ne laisser entrer les informations dans le domaine avionique que si elles respectent un format attendu pour un plan de vol. Cela permet d'éviter que des informations, même envoyées par un émetteur habilité, puissent perturber le fonctionnement d'un calculateur FMS de gestion du vol de l'aéronef, destinataire desdites informations. Avantageusement, la barrière 16 réalise en outre un filtrage sémantique 16b et/ou le calculateur FMS destinataire des informations dans le domaine avionique 20 réalise une analyse sémantique des informations reçues. Le filtrage sémantique et/ou l'analyse sémantique correspondent à une vérification de la non dangerosité du nouveau plan de vol par rapport au contexte de l'aéronef (relief, météo, etc.). Ainsi, des informations reçues par l'aéronef doivent subir plusieurs contrôles successifs et de natures différentes avant de pouvoir être exploitées par l'aéronef Cela permet de garantir la sécurité (« safety » en anglais) du vol de l'aéronef.

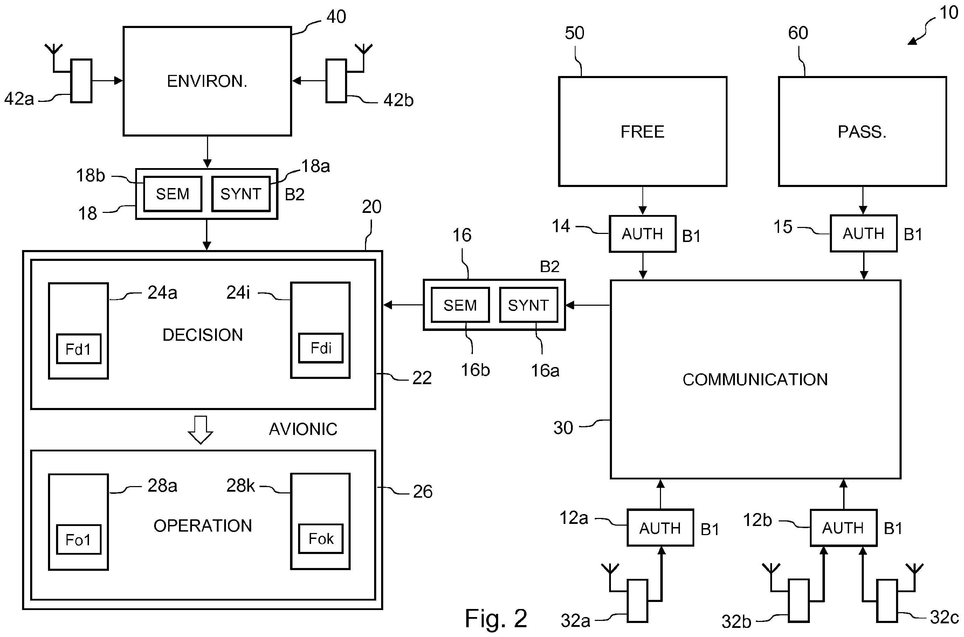

Dans un mode particulier de réalisation illustré sur la figure 2, le domaine avionique 20 comprend un sous-domaine 22 dit de décision et un sous-domaine 26 dit opérationnel. Le sous-domaine de décision 22 comprend des équipements avioniques 24a ... 24i mettant en œuvre des fonctions Fd1 ... Fdi de gestion stratégique de l'aéronef. Ces fonctions de gestion stratégique de l'aéronef sont des fonctions qui n'impactent pas le vol de l'aéronef à court terme (par exemple quelques secondes), mais à moyen terme (par exemple plus de 10 minutes) ou à long terme (par exemple plus d'une heure). Ces fonctions correspondent par exemple à la gestion de la trajectoire future de l'aéronef, sans impliquer d'actions à court terme sur les commandes de vol de l'aéronef. Le sous-domaine opérationnel 26 comprend des équipements avioniques 28a ... 28k mettant en œuvre des fonctions Fo1 ... Fok de gestion tactique de l'aéronef. Ces fonctions de gestion tactique de l'aéronef sont des fonctions qui agissent sur le vol de l'aéronef à court terme (par exemple de quelques secondes à quelques minutes). Elles agissent par exemple sur les commandes de vol de l'aéronef pour commander des gouvernes de l'aéronef afin de suivre une trajectoire correspondant à un plan de vol courant de l'aéronef. Le sous-domaine de décision 22 est relié au domaine de communication 30 via la barrière 16 du deuxième type qui est disposée de telle façon que les informations transmises du domaine de communication 30 vers le domaine avionique 20 et qui franchissent la barrière 16 du deuxième type, arrivent dans le sous-domaine de décision 22. Le sous-domaine opérationnel 26 est relié au sous-domaine de décision 22. Ainsi, les informations issues du domaine de communication 30 n'arrivent pas directement dans le sous-domaine opérationnel 26 dont les fonctions agissent à court terme sur le vol de l'aéronef. Cela permet de protéger la sécurité (« safety » en anglais) du vol de l'aéronef en ne permettant pas à des informations reçues par le domaine avionique 20 en provenance du domaine de communication 30 d'être directement reçues par des fonctions de gestion tactique de l'aéronef : ainsi, les informations reçues ne risquent pas d'avoir une influence à court terme sur le vol de l'aéronef.

Dans l'exemple précité de réception d'un nouveau plan de vol par l'aéronef, le calculateur FMS de gestion de vol est situé dans le sous-domaine de décision. Lorsqu'un nouveau plan de vol est reçu et accepté par ce calculateur FMS, celui-ci transforme les informations correspondant à ce nouveau plan de vol en consignes qu'il envoie vers les calculateurs de commande de vol situés dans le sous-domaine opérationnel 26. Ainsi, ces calculateurs de commandes de vol, qui commandent des actions (mouvements de gouvernes, etc.) qui ont un impact à court terme sur le vol de l'aéronef, reçoivent des informations auxquelles correspond un niveau de confiance très élevé puisque ces informations sont élaborées par le calculateur FMS situé dans le domaine avionique, à partir d'informations ayant subi plusieurs contrôles successifs comme indiqué précédemment.

De façon avantageuse, un équipement avionique 24a ... 24i du sous-domaine de décision 22 est configuré pour :
- acquérir des informations reçues du domaine de communication 30 via la barrière 16 du deuxième type ;
- déterminer des informations transformées, fonction des informations reçues du domaine de communication ;
- transmettre les informations transformées vers le sous-domaine opérationnel 26.

Ainsi, le sous-domaine opérationnel 26 reçoit des informations transformées dans le sous-domaine de décision 22, plutôt que des informations similaires à celles reçues du domaine de communication 30. Etant donné que le sous-domaine de décision 22 fait partie du domaine de décision 20, le niveau de confiance qui peut être accordé aux informations transformées dans ce sous-domaine de décision 22 est élevé. Par exemple, lorsque le sous-domaine de décision 22 reçoit un plan de vol (correspondant à une suite de points de passage, ou « waypoints » en anglais) provenant du domaine de communication 30 via la barrière 16 du deuxième type, un équipement avionique 24a ... 24i du sous-domaine de décision 22 détermine une trajectoire de l'aéronef correspondant à ce plan de vol, ladite trajectoire permettant à l'aéronef de passer par les différents points de passage du plan de vol. L'équipement avionique 24a ... 24i du sous-domaine de décision 22 transmet cette trajectoire au sous-domaine opérationnel 26. Ainsi, le sous-domaine opérationnel 26 ne reçoit pas directement le plan de vol provenant du domaine de communication 30, mais il reçoit une trajectoire élaborée par l'équipement avionique du sous-domaine de décision 22.

De plus, lorsque l'équipement avionique 24a ... 24i assurant la transformation des informations dans le sous-domaine de décision 22 comporte également une fonction Fd1 ... Fdi réalisant une analyse sémantique d'informations reçues du domaine de communication 30, comme indiqué précédemment, les informations transformées par cet équipement avionique présentent un niveau de confiance encore plus élevé, ce qui garantit un niveau de sécurité (« safety » en anglais) du vol de l'aéronef encore meilleur. En effet, comme indiqué précédemment, des informations reçues du domaine de communication 30 qui pourraient présenter un risque pour le vol de l'aéronef sont rejetées lors de l'analyse sémantique. Ainsi, les informations transformées transmises vers le sous-domaine opérationnel 26 sont basées uniquement sur des informations acceptées lors de l'analyse sémantique.

De façon avantageuse, seules des informations transformées dans le sous-domaine de décision 22 sont transmises du sous-domaine de décision 22 vers le sous-domaine opérationnel 26. Ainsi le sous-domaine opérationnel 26 ne reçoit que des informations préalablement transformées dans le sous-domaine de décision 22, à l'exclusion de toute information non transformée reçue du domaine de communication. Cela permet de garantir un niveau élevé de sécurité du sous-domaine opérationnel 26.

Les équipements avioniques 24a ... 24i du sous-domaine de décision 22 sont avantageusement distincts des équipements avioniques 28a ... 28k du sous-domaine opérationnel 26, ce qui permet une meilleure ségrégation des deux sous-domaines et donc une meilleure protection du sous-domaine opérationnel 26 par rapport aux informations reçues du domaine de communication 30 : ces informations reçues du domaine de communication 30 ne risquent pas d'arriver de façon imprévue dans le sous-domaine opérationnel 26. Seules les informations transformées dans le sous-domaine de décision 22 peuvent arriver dans le sous-domaine opérationnel 26.

Dans un mode de réalisation, le système de communication comprend en outre un domaine 40, dit domaine d'environnement, comme représenté sur la figure 2. Ce domaine d'environnement est un domaine auquel sont raccordées des sources d'informations de l'aéronef 42a, 42b de type radionavigation. Une source d'informations de type radionavigation correspond par exemple à l'un des types de sources suivants :
- un récepteur d'un système GNSS (« Global Navigation Satellite System » en anglais) de localisation par satellite, par exemple un système GPS (« Global Positioning System » en anglais) ;
- un récepteur DME (« Distance Measurement Equipment » en anglais) ;
- un récepteur d'un système d'atterrissage aux instruments de type ILS (« Instrument Landing System » en anglais) ;
- etc.

Ces sources d'informations de type radionavigation ont la particularité de fournir des informations relatives à l'environnement de l'aéronef (position, altitude, etc.) basées sur la réception de signaux radioélectriques par ces sources d'informations. Les informations fournies par ces sources d'informations sont destinées à être utilisées par des équipements du domaine avionique 20. Il est souhaitable de protéger l'aéronef d'informations erronées susceptibles d'être fournies par ces sources d'informations en cas de perturbations volontaires ou involontaires des signaux radioélectriques reçus par ces sources d'informations. Pour cela, le système de communication 10 est tel que le domaine d'environnement 40 est relié au domaine avionique 20 et le système de communication comporte une barrière 18 du deuxième type disposée pour filtrer les informations transmises du domaine d'environnement 40 vers le domaine avionique 20. Cette barrière du deuxième type est configurée pour réaliser un filtrage syntaxique 18a et/ou un filtrage sémantique 18b desdites informations transmises du domaine d'environnement vers le domaine avionique. Ces filtrages syntaxique et/ou sémantique sont similaires à ceux déjà décrits pour la barrière 16 située entre le domaine de communication 30 et le domaine avionique 20. La barrière 18 permet ainsi de protéger la sécurité (« safety » en anglais) du vol de l'aéronef en empêchant l'entrée dans le domaine avionique 20 d'informations issues des sources de radionavigation 42a, 42b qui seraient susceptibles de compromettre la sécurité du vol de l'aéronef.

De plus, dans le mode particulier de réalisation dans lequel au moins un équipement avionique 24a ... 24i, 28a ... 28k du domaine avionique 20 comporte une fonction (par exemple une fonction de gestion de l'aéronef) configurée pour réaliser une analyse sémantique d'informations reçues par ladite fonction, cette analyse sémantique peut s'appliquer non seulement aux informations reçues dans le domaine avionique 20 en provenance du domaine de communication 30, mais aussi aux informations reçues dans le domaine avionique 20 en provenance du domaine d'environnement 40. Cette analyse sémantique correspond à une acceptation ou à un refus des informations reçues par ladite fonction, en fonction d'une part de valeurs desdites informations et d'autre part d'un contexte de l'aéronef. Par exemple, lorsque le domaine avionique 20 reçoit, du domaine d'environnement 40, des informations de position courante de l'aéronef, incluant une altitude courante de l'aéronef, issues d'un système GPS de positionnement par satellite, un équipement avionique du domaine avionique 20 compare ladite altitude courante avec une altitude de l'aéronef mesurée par un radioaltimètre de l'aéronef. Le radioaltimètre est un équipement autonome embarqué à bord de l'aéronef : il est considéré fiable et il fait partie du domaine avionique 20. L'altitude de l'aéronef mesurée par le radioaltimètre est par conséquent considérée comme correspondant à un contexte de l'aéronef. Si l'altitude courante de l'aéronef issue du système GPS ne correspond pas à l'altitude de l'aéronef mesurée par le radioaltimètre, alors l'équipement avionique refuse les informations de position courante de l'aéronef issues du système GPS. Si l'altitude courante de l'aéronef issue du système GPS correspond à l'altitude de l'aéronef mesurée par le radioaltimètre, alors l'équipement avionique accepte les informations de position courante de l'aéronef issues du système GPS.

Dans un mode de réalisation, le système de communication comprend en outre un domaine 60, dit domaine passagers, comme représenté sur la figure 2. Le domaine passagers est un domaine auquel sont raccordées des interfaces prévues pour le raccordement d'équipements électroniques des passagers dans la cabine de l'aéronef. Le niveau de sécurité du domaine passagers est moins élevé que le niveau de sécurité du domaine communication étant donné qu'il est essentiellement dédié au divertissement des passagers et qu'aucune action sur l'aéronef n'est possible depuis des équipements dudit domaine passagers. Le domaine passagers 60 est relié au domaine de communication 30 de façon à permettre l'affichage, sur les équipements électroniques des passagers, d'informations relatives au vol de l'aéronef (telles par exemple qu'une position courante de l'aéronef). Afin de protéger le niveau de sécurité du domaine de communication 30, le domaine passagers 60 est relié au domaine de communication 30 par une barrière 15 du premier type. Cette barrière est configurée pour laisser entrer dans le domaine communication 30 des informations issues du domaine passagers 60 seulement si elles correspondent à une communication authentifiée.

Dans un mode de réalisation, le système de communication 10 comprend en outre un domaine 50, dit domaine libre, comme représenté avec le libellé FREE sur la figure 2. Ce domaine libre est un domaine auquel sont raccordés des équipements de l'aéronef implémentant des fonctions n'ayant pas d'impact sur la sécurité (« safety » en anglais) de l'aéronef, au moins à court ou à moyen terme. Ces fonctions sont par exemple relatives à la maintenance de l'aéronef, à la gestion de la cabine passagers, etc. Le domaine libre 50 est relié au domaine de communication 30 par une barrière 14 du premier type. Cette barrière étant configurée pour laisser entrer dans le domaine communication des informations issues du domaine libre seulement si elles correspondent à une communication authentifiée. Par exemple, un opérateur de maintenance raccorde un terminal de maintenance à un port de communication du domaine libre 50. Le terminal de maintenance peut ainsi communiquer avec un calculateur de maintenance de l'aéronef, par exemple situé également dans le domaine libre 50. Ce calculateur de maintenance est par exemple de type CMS (« Central Maintenance System » en anglais). Pour réaliser des opérations de maintenance, une communication du calculateur de maintenance est parfois nécessaire avec des calculateurs du domaine avionique 20 (par exemple pour acquérir des informations, pour manœuvrer des gouvernes de l'aéronef lorsque l'aéronef est stationné au sol, etc.). Pour cela, l'opérateur de maintenance doit établir une communication authentifiée, ce qui atteste qu'il est habilité à réaliser des opérations de maintenance de l'aéronef. La barrière 14 ne laisse entrer, dans le domaine de communication 30, des informations issues du calculateur de maintenance, que si ces informations correspondent à ladite communication authentifiée. Ainsi, un opérateur non habilité ne risque pas d'établir une telle communication : il ne peut pas envoyer d'informations vers le domaine de communication, ce qui permet de préserver le niveau de sécurité du domaine de communication. Lorsqu'une communication authentifiée est établie, si des informations doivent être transmises vers le domaine avionique 20, celles-ci sont contrôlées par la barrière 16 qui réalise un filtrage syntaxique et éventuellement un filtrage sémantique. Dans certains des modes de réalisation précités, des fonctions des équipements du domaine avionique réalisent en outre une analyse sémantique des informations reçues. Le filtrage sémantique et/ou l'analyse sémantique sont par exemple configurés de telle façon que des informations issues du terminal de maintenance sont refusées lorsque le contexte est tel que l'aéronef est en vol afin de ne pas compromettre la sécurité (« safety » en anglais) du vol de l'aéronef. De telles informations ne sont acceptées que lorsque l'aéronef est stationné au sol.

## Revendications

1. Système de communication (10) d'un aéronef (1), le système de communication comprenant une interface de communication (32a, 32b, 32c) avec l'extérieur de l'aéronef et un domaine avionique (20) auquel correspond un niveau de sécurité le plus élevé du système de communication, tel que :
- le système de communication comprend un domaine (30) dit de communication auquel est raccordée ladite interface de communication et auquel correspond un niveau de sécurité moins élevé que le niveau de sécurité du domaine avionique ;
- le système de communication comporte une barrière (12a, 12b) d'un premier type disposée pour filtrer les informations issues de l'interface de communication (32a, 32b, 32c), cette barrière d'un premier type étant une barrière d'authentification configurée pour laisser entrer lesdites informations dans le domaine de communication (30) seulement si elles correspondent à une communication authentifiée ; et
- le système de communication comporte une barrière (16) d'un deuxième type disposée pour filtrer des informations transmises du domaine de communication (30) vers le domaine avionique (20), cette barrière d'un deuxième type étant configurée pour réaliser au moins un filtrage syntaxique desdites informations transmises du domaine de communication vers le domaine avionique,
**caractérisé en ce que** le domaine avionique comprend au moins un calculateur de gestion de vol de l'aéronef (24a ... 24i, 28a ... 28k) dont une fonction de navigation de l'aéronef (Fd1 ... Fdi, Fo1 ... Fok) est configurée pour réaliser une analyse sémantique d'informations reçues par ladite fonction, cette analyse sémantique correspondant à une acceptation des informations reçues par la fonction de navigation si un effet des informations reçues, sur le vol de l'aéronef, est compatible avec un contexte de l'aéronef ou à un refus desdites informations reçues par ladite fonction de navigation si l'effet des informations reçues, sur le vol de l'aéronef, n'est pas compatible avec le contexte de l'aéronef.

2. Système de communication selon la revendication 1 **caractérisé en ce qu'**il comprend :
- un ensemble d'interfaces de communication (32a, 32b, 32c) avec l'extérieur de l'aéronef, auquel appartient ladite interface de communication, toutes les interfaces de communication de l'ensemble d'interfaces de communication étant raccordées au domaine de communication (30) ; et
- une ou plusieurs barrières du premier type (12a, 12b), dont ladite barrière du premier type, disposées de façon à filtrer les informations issues de chacune des interfaces de communication de l'ensemble d'interfaces de communication, cette ou ces barrière(s) du premier type étant configurée(s) pour laisser entrer, dans le domaine de communication (30), les informations issues d'une interface de communication, seulement si ces informations correspondent à une communication authentifiée.

3. Système de communication selon l'une quelconque des revendications précédentes **caractérisé en ce que** la deuxième barrière (16) est en outre configurée pour réaliser un filtrage sémantique (16b) des informations transmises du domaine de communication (30) vers le domaine avionique (20), ce filtrage sémantique correspondant à l'autorisation ou à l'interdiction de la transmission des informations du domaine communication vers le domaine avionique en fonction de plages de valeurs autorisées desdites informations.

4. Système de communication selon l'une quelconque des revendications précédentes **caractérisé en ce que** le domaine avionique (20) comprend :
- un sous-domaine (22) dit de décision, relié au domaine de communication (30), le sous-domaine de décision (22) comprenant des équipements avioniques (24a ... 24i) mettant en œuvre des fonctions de gestion stratégique de l'aéronef ; et
- un sous-domaine (26) dit opérationnel, relié au sous-domaine de décision (22), le sous-domaine opérationnel (26) comprenant des équipements avioniques (28a ... 28k) mettant en œuvre des fonctions de gestion tactique de l'aéronef,
et **en ce que** la barrière (16) du deuxième type est disposée de telle façon que les informations transmises du domaine de communication (30) vers le domaine avionique (20) et qui franchissent la barrière du deuxième type, arrivent dans le sous-domaine de décision (22).

5. Système de communication selon la revendication 4 **caractérisé en ce que** le sous-domaine de décision (22) comprend au moins un équipement avionique (24a ... 24i) configuré pour :
- acquérir des informations reçues du domaine de communication (30) ;
- déterminer des informations transformées, fonction des informations reçues du domaine de communication ;
- transmettre les informations transformées vers le sous-domaine opérationnel (26).

6. Système de communication selon la revendication 5 **caractérisé en ce que** ledit au moins un équipement avionique est configuré pour acquérir l'ensemble des informations reçues du domaine de communication (30) et destinées à être transmises au sous-domaine opérationnel (26), pour déterminer des informations transformées fonction desdites informations reçues du domaine de communication et pour transmettre, vers le sous-domaine opérationnel (26), les informations transformées à l'exclusion de toute information non transformée reçue du domaine de communication (30).

7. Système de communication selon l'une quelconque des revendications 4 à 6 **caractérisé en ce que** l'équipement avionique dont une fonction est configurée pour réaliser ladite analyse sémantique est un équipement avionique (24a ... 24i) du sous-domaine de décision (22) et **en ce que** ladite fonction (Fd1 ... Fdi) est une fonction de gestion stratégique de l'aéronef configurée pour ne transmettre vers le sous-domaine opérationnel (26) que des informations acceptées lors de l'analyse sémantique.

8. Système de communication selon l'une quelconque des revendications 4 à 6 **caractérisé en ce que** l'équipement avionique dont une fonction est configurée pour réaliser ladite analyse sémantique est un équipement avionique (28a ... 28k) du sous-domaine opérationnel et ladite fonction (Fo1 ... Fok) est une fonction de gestion tactique de l'aéronef configurée pour ne pas utiliser des informations rejetées lors de l'analyse sémantique, pour le calcul d'ordres opérationnels de l'aéronef.

9. Système de communication selon l'une quelconque des revendications précédentes **caractérisé en ce qu'**il comprend en outre un domaine (40) dit d'environnement, auquel sont raccordées des sources d'informations (42a, 42b) de l'aéronef de type radionavigation, ce domaine d'environnement étant relié au domaine avionique (20) et **en ce que** le système de communication comporte une barrière (18) du deuxième type disposée pour filtrer les informations transmises du domaine d'environnement vers le domaine avionique, cette barrière du deuxième type étant configurée pour réaliser un filtrage syntaxique (18a) et/ou un filtrage sémantique (18b) desdites informations transmises du domaine d'environnement (40) vers le domaine avionique (20).

10. Système de communication selon l'une quelconque des revendications précédentes **caractérisé en ce qu'**il comprend en outre un domaine (60) dit passagers, auquel correspond un niveau de sécurité moins élevé que le niveau de sécurité du domaine communication (30) et auquel sont raccordées des interfaces prévues pour le raccordement d'équipements électroniques des passagers dans la cabine de l'aéronef, le domaine passagers (60) étant relié au domaine de communication (30) par une barrière (15) du premier type, cette barrière étant configurée pour laisser entrer dans le domaine de communication (30) des informations issues du domaine passagers (60) seulement si elles correspondent à une communication authentifiée.

11. Système de communication selon l'une quelconque des revendications précédentes **caractérisé en ce qu'**il comprend en outre un domaine (50) dit libre, auquel sont raccordés des équipements de l'aéronef implémentant des fonctions n'ayant pas d'impact sur la sécurité de l'aéronef, le domaine libre (50) étant relié au domaine de communication (30) par une barrière (14) du premier type, cette barrière étant configurée pour laisser entrer dans le domaine de communication (30) des informations issues du domaine libre seulement si elles correspondent à une communication authentifiée.

12. Procédé de communication d'un aéronef (1) comportant un système de communication (10), le système de communication comprenant une interface de communication (32a, 32b, 32c) avec l'extérieur de l'aéronef et un domaine avionique (20) auquel correspond un niveau de sécurité le plus élevé du système de communication, tel que le système de communication comprenant un domaine (30) dit de communication auquel est raccordée ladite interface de communication et auquel correspond un niveau de sécurité moins élevé que le niveau de sécurité du domaine avionique, le procédé comporte les étapes suivantes :
- filtrer les informations issues de l'interface de communication au moyen d'une barrière (12a, 12b) d'un premier type du système de communication, cette barrière d'un premier type étant une barrière d'authentification configurée pour laisser entrer lesdites informations dans le domaine de communication (30) seulement si elles correspondent à une communication authentifiée ; et
- filtrer des informations transmises du domaine de communication (30) vers le domaine avionique (20) au moyen d'une barrière (16) d'un deuxième type configurée pour réaliser au moins un filtrage syntaxique (16a) desdites informations transmises du domaine de communication vers le domaine avionique,
**caractérisé en ce qu'**il comprend en outre une étape d'analyse sémantique d'informations reçues par une fonction de navigation de l'aéronef (Fd1 ... Fdi, Fo1 ... Fok) d'un calculateur de gestion de vol de l'aéronef (24a ... 24i, 28a ... 28k) du domaine avionique, cette analyse sémantique correspondant à une acceptation des informations reçues par la fonction de navigation si un effet des informations reçues, sur le vol de l'aéronef, est compatible avec un contexte de l'aéronef ou à un refus desdites informations reçues par ladite fonction de navigation si l'effet des informations reçues, sur le vol de l'aéronef, n'est pas compatible avec le contexte de l'aéronef.

13. Aéronef (1) **caractérisé en ce qu'**il comporte un système de communication (10) selon l'une quelconque des revendications 1 à 11.

## Patentansprüche

1. Kommunikationssystem (10) eines Luftfahrzeugs (1), wobei das Kommunikationssystem eine Schnittstelle zur Kommunikation (32a, 32b, 32c) mit dem Äußeren des Luftfahrzeugs und einen Avionikbereich (20) umfasst, welchem ein höchstes Sicherheitsniveau des Kommunikationssystems entspricht, wobei:
- das Kommunikationssystem einen Kommunikationsbereich (30) umfasst, an welchen die Kommunikationsschnittstelle angeschlossen ist und welchem ein niedrigeres Sicherheitsniveau als das Sicherheitsniveau des Avionikbereichs entspricht;
- das Kommunikationssystem eine Barriere (12a, 12b) eines ersten Typs aufweist, die dafür angeordnet ist, die Informationen aus der Kommunikationsschnittstelle (32a, 32b, 32c) zu filtern, wobei diese Barriere eines ersten Typs eine Authentifizierungsbarriere ist, die dazu ausgebildet ist, die Informationen nur dann in den Kommunikationsbereich (30) einzulassen, wenn sie einer authentifizierten Kommunikation entsprechen; und
- das Kommunikationssystem eine Barriere (16) eines zweiten Typs aufweist, die dafür angeordnet ist, Informationen zu filtern, die vom Kommunikationsbereich (30) zum Avionikbereich (20) übertragen werden, wobei diese Barriere eines zweiten Typs dazu ausgebildet ist, wenigstens eine Syntaxfilterung der Informationen vorzunehmen, die vom Kommunikationsbereich zum Avionikbereich übertragen werden,
**dadurch gekennzeichnet, dass** der Avionikbereich wenigstens einen Flugmanagementrechner des Luftfahrzeugs (24a ... 24i, 28a ... 28k) umfasst, dessen eine Navigationsfunktion des Luftfahrzeugs (Fd1 ... Fdi, Fo1 ... Fok) dazu ausgebildet ist, eine semantische Analyse von Informationen vorzunehmen, die von der Funktion empfangen werden, wobei diese semantische Analyse einer Akzeptierung der Informationen entspricht, die von der Navigationsfunktion empfangen werden, wenn eine Wirkung der empfangenen Informationen auf den Flug des Luftfahrzeugs mit einem Kontext des Luftfahrzeugs kompatibel ist, oder einer Ablehnung der Informationen entspricht, die von der Navigationsfunktion empfangen werden, wenn die Wirkung der empfangenen Informationen auf den Flug des Luftfahrzeugs nicht mit dem Kontext des Luftfahrzeugs kompatibel ist.

2. Kommunikationssystem nach Anspruch 1, **dadurch gekennzeichnet, dass** es Folgendes umfasst:
- eine Menge von Schnittstellen zur Kommunikation (32a, 32b, 32c) mit dem Äußeren des Luftfahrzeugs, zu der die Kommunikationsschnittstelle gehört, wobei alle Kommunikationsschnittstellen der Menge von Kommunikationsschnittstellen an den Kommunikationsbereich (30) angeschlossen sind; und
- eine oder mehrere Barrieren vom ersten Typ (12a, 12b), darunter die Barriere vom ersten Typ, die dazu angeordnet sind, die Informationen aus jeder der Kommunikationsschnittstellen der Menge von Kommunikationsschnittstellen zu filtern, wobei diese Barriere(n) vom ersten Typ dazu ausgebildet ist bzw. sind, die Informationen aus einer Kommunikationsschnittstelle nur dann in den Kommunikationsbereich (30) einzulassen, wenn diese Informationen einer authentifizierten Kommunikation entsprechen.

3. Kommunikationssystem nach einem der vorhergehenden Ansprüche, **dadurch gekennzeichnet, dass** die zweite Barriere (16) ferner dazu ausgebildet ist, eine semantische Filterung (16b) der Informationen vorzunehmen, die vom Kommunikationsbereich (30) zum Avionikbereich (20) übertragen werden, wobei diese semantische Filterung der Zulassung oder Untersagung der Übertragung der Informationen vom Kommunikationsbereich zum Avionikbereich in Abhängigkeit von zugelassenen Wertebereichen der Informationen entspricht.

4. Kommunikationssystem nach einem der vorhergehenden Ansprüche, **dadurch gekennzeichnet, dass** der Avionikbereich (20) Folgendes umfasst:
- einen Entscheidungsteilbereich (22), die mit dem Kommunikationsbereich (30) verbunden ist, wobei der Entscheidungsteilbereich (22) Avionikeinrichtungen (24a... 24i) umfasst, die Funktionen zur strategischen Verwaltung des Luftfahrzeugs umsetzen; und
- einen operative Teilbereich (26), der mit dem Entscheidungsteilbereich (22) verbunden ist, wobei der operative Teilbereich (26) Avionikeinrichtungen (28a... 28k) umfasst, die Funktionen zur taktischen Verwaltung des Luftfahrzeugs umsetzen,
und dadurch, dass die Barriere (16) vom zweiten Typ so angeordnet ist, dass die Informationen, die vom Kommunikationsbereich (30) zum Avionikbereich (20) übertragen werden und die Barriere vom zweiten Typ passieren, im Entscheidungsteilbereich (22) ankommen.

5. Kommunikationssystem nach Anspruch 4, **dadurch gekennzeichnet, dass** der Entscheidungsteilbereich (22) wenigstens eine Avionikeinrichtung (24a ... 24i) umfasst, die dazu ausgebildet ist:
- Informationen zu erfassen, die vom Kommunikationsbereich (30) empfangen werden;
- umgewandelte Informationen in Abhängigkeit von den Informationen zu bestimmen, die vom Kommunikationsbereich empfangen werden;
- die umgewandelten Informationen zum operativen Teilbereich (26) zu übertragen.

6. Kommunikationssystem nach Anspruch 5, **dadurch gekennzeichnet, dass** die wenigstens eine Avionikeinrichtung dazu ausgebildet ist, die Menge der Informationen zu erfassen, die vom Kommunikationsbereich (30) empfangen werden und dazu bestimmt sind, an den operativen Teilbereich (26) übertragen zu werden, um umgewandelte Informationen in Abhängigkeit von den Informationen zu bestimmen, die vom Kommunikationsbereich empfangen werden, und die umgewandelten Informationen zum operativen Teilbereich (26) zu übertragen, unter Ausschluss sämtlicher nicht umgewandelter Informationen, die vom Kommunikationsbereich (30) empfangen werden.

7. Kommunikationssystem nach einem der Ansprüche 4 bis 6, **dadurch gekennzeichnet, dass** die Avionikeinrichtung, deren eine Funktion dazu ausgebildet ist, die semantische Analyse vorzunehmen, eine Avionikeinrichtung (24a ... 24i) des Entscheidungsteilbereichs (22) ist, und dadurch, dass die Funktion (Fd1 ... Fdi) eine Funktion zur strategischen Verwaltung des Luftfahrzeugs ist, die dazu ausgebildet ist, nur Informationen zum operativen Teilbereich (26) zu übertragen, die bei der semantischen Analyse akzeptiert werden.

8. Kommunikationssystem nach einem der Ansprüche 4 bis 6, **dadurch gekennzeichnet, dass** die Avionikeinrichtung, deren eine Funktion dazu ausgebildet ist, die semantische Analyse vorzunehmen, eine Avionikeinrichtung (28a ... 28k) des operativen Teilbereichs ist und die Funktion (Fo1 ... Fok) eine Funktion zur taktischen Verwaltung des Luftfahrzeugs ist, die dazu ausgebildet ist, zur Berechnung von operativen Befehlen des Luftfahrzeugs keine Informationen zu verwenden, die bei der semantischen Analyse abgelehnt werden.

9. Kommunikationssystem nach einem der vorhergehenden Ansprüche, **dadurch gekennzeichnet, dass** es ferner einen Umgebungsbereich (40) umfasst, an welchen Informationsquellen (42a, 42b) des Luftfahrzeugs vom Typ Funknavigation angeschlossen sind, wobei der Umgebungsbereich mit dem Avionikbereich (20) verbunden ist, und dadurch, dass das Kommunikationssystem eine Barriere (18) vom zweiten Typ aufweist, die dafür angeordnet ist, die Informationen zu filtern, die vom Umgebungsbereich zum Avionikbereich übertragen werden, wobei diese Barriere vom zweiten Typ dazu ausgebildet ist, eine Syntaxfilterung (18a) und/oder eine semantische Filterung (18b) der Informationen vorzunehmen, die vom Umgebungsbereich (40) zum Avionikbereich (20) übertragen werden.

10. Kommunikationssystem nach einem der vorhergehenden Ansprüche, **dadurch gekennzeichnet, dass** es ferner einen Passagierbereich (60) umfasst, welchem ein niedrigeres Sicherheitsniveau als das Sicherheitsniveau des Kommunikationsbereichs (30) entspricht und an welchen Schnittstellen angeschlossen sind, die zum Anschluss von elektronischen Einrichtungen der Passagiere in der Kabine des Luftfahrzeugs vorgesehen sind, wobei der Passagierbereich (60) über eine Barriere (15) vom ersten Typ mit dem Kommunikationsbereich (30) verbunden ist, wobei diese Barriere dazu ausgebildet ist, Informationen aus dem Passagierbereich (60) nur dann in den Kommunikationsbereich (30) einzulassen, wenn sie einer authentifizierten Kommunikation entsprechen.

11. Kommunikationssystem nach einem der vorhergehenden Ansprüche, **dadurch gekennzeichnet, dass** es ferner einen freien Bereich (50) umfasst, an welchen Einrichtungen des Luftfahrzeugs angeschlossen sind, die Funktionen implementieren, die keine Auswirkung auf die Sicherheit des Luftfahrzeugs haben, wobei der freie Bereich (50) über eine Barriere (14) vom ersten Typ mit dem Kommunikationsbereich (30) verbunden ist, wobei diese Barriere dazu ausgebildet ist, Informationen aus dem freien Bereich nur dann in den Kommunikationsbereich (30) einzulassen, wenn sie einer authentifizierten Kommunikation entsprechen.

12. Kommunikationsverfahren eines Luftfahrzeugs (1), das ein Kommunikationssystem (10) aufweist, wobei das Kommunikationssystem eine Schnittstelle zur Kommunikation (32a, 32b, 32c) mit dem Äußeren des Luftfahrzeugs und einen Avionikbereich (20) umfasst, welchem ein höchstes Sicherheitsniveau des Kommunikationssystems entspricht, wobei, das Kommunikationssystem einen Kommunikationsbereich (30) umfassend, an welchen die Kommunikationsschnittstelle angeschlossen ist und welchem ein niedrigeres Sicherheitsniveau als das Sicherheitsniveau des Avionikbereichs entspricht, das Verfahren die folgenden Schritte aufweist:
- Filtern der Informationen aus der Kommunikationsschnittstelle mittels einer Barriere (12a, 12b) eines ersten Typs des Kommunikationssystems, wobei diese Barriere eines ersten Typs eine Authentifizierungsbarriere ist, die dazu ausgebildet ist, die Informationen nur dann in den Kommunikationsbereich (30) einzulassen, wenn sie einer authentifizierten Kommunikation entsprechen; und
- Informationen, die vom Kommunikationsbereich (30) zum Avionikbereich (20) übertragen werden, mittels einer Barriere (16) eines zweiten Typs zu filtern, die dazu ausgebildet ist, wenigstens eine Syntaxfilterung (16a) der Informationen vorzunehmen, die vom Kommunikationsbereich zum Avionikbereich übertragen werden,
**dadurch gekennzeichnet, dass** es ferner einen Schritt einer semantischen Analyse von Informationen umfasst, die von einer Navigationsfunktion des Luftfahrzeugs (Fd1 ... Fdi, Fo1 ... Fok) eines Flugmanagementrechners des Luftfahrzeugs (24a ... 24i, 28a ... 28k) des Avionikbereichs empfangen werden, wobei diese semantische Analyse einer Akzeptierung der Informationen entspricht, die von der Navigationsfunktion empfangen werden, wenn eine Wirkung der empfangenen Informationen auf den Flug des Luftfahrzeugs mit einem Kontext des Luftfahrzeugs kompatibel ist, oder einer Ablehnung der Informationen entspricht, die von der Navigationsfunktion empfangen werden, wenn die Wirkung der empfangenen Informationen auf den Flug des Luftfahrzeugs nicht mit dem Kontext des Luftfahrzeugs kompatibel ist.

13. Luftfahrzeug (1), **dadurch gekennzeichnet, dass** es ein Kommunikationssystem (10) nach einem der Ansprüche 1 bis 11 aufweist.

## Claims

1. Communication system (10) for an aircraft (1), the communication system comprising a communication interface (32a, 32b, 32c) with the outside of the aircraft and an avionics domain (20) of which the security level is the highest of the communication system, such that:
- the communication system comprises a so-called communication domain (30) to which is connected said communication interface and of which the security level is lower than the security level of the avionics domain;
- the communication system comprises a barrier (12a, 12b) of a first type arranged to filter the information coming from the communication interface (32a, 32b, 32c), this barrier of a first type being an authentication barrier configured to allow said information to pass into the communication domain (30) only if it corresponds to an authenticated communication; and
- the communication system comprises a barrier (16) of a second type arranged to filter information transmitted from the communication domain (30) to the avionics domain (20), this barrier of a second type being configured to carry out at least a syntactic filtering of said information transmitted from the communication domain to the avionics domain,
**characterized in that** the avionics domain comprises at least one aircraft flight management system (24a,..., 24i, 28a,..., 28k) a function (Fd1,..., Fdi, Fo1,..., Fok) of which for navigation of the aircraft is configured to carry out semantic analysis of information received by said function, this semantic analysis corresponding to acceptance of the information received by the navigation function if an effect of the received information, on the flight of the aircraft, is compatible with a context of the aircraft or to a rejection of said information received by said navigation function if the effect of the received information, on the flight of the aircraft, is incompatible with the context of the aircraft.

2. Communication system according to Claim 1, **characterized in that** it comprises:
- a set of communication interfaces (32a, 32b, 32c) with the outside of the aircraft, to which said communication interface belongs, all of the communication interfaces of the set of communication interfaces being connected to the communication domain (30); and
- one or more barriers of the first type (12a, 12b), including said barrier of the first type, which are arranged so as to filter the information coming from each of the communication interfaces of the set of communication interfaces, this or these barrier(s) of the first type being configured to allow the information coming from a communication interface to pass into the communication domain (30) only if this information corresponds to an authenticated communication.

3. Communication system according to either one of the preceding claims, **characterized in that** the second barrier (16) is further configured to carry out semantic filtering (16b) of the information transmitted from the communication domain (30) to the avionics domain (20), this semantic filtering corresponding to permitting or preventing the transmission of the information from the communication domain to the avionics domain, depending on authorized ranges of values of said information.

4. Communication system according to any one of the preceding claims, **characterized in that** the avionics domain (20) comprises:
- a so-called decision sub-domain (22) connected to the communication domain (30), the decision sub-domain (22) comprising avionics equipment (24a,..., 24i) carrying out functions of strategic management of the aircraft; and
- a so-called operational sub-domain (26) connected to the decision sub-domain (22), the operational sub-domain (26) comprising avionics equipment (28a,..., 28k) carrying out functions of tactical management of the aircraft,
and **in that** the barrier (16) of the second type is arranged such that the information which is transmitted from the communication domain (30) to the avionics domain (20), and which passes the barrier of the second type, arrives in the decision sub-domain (22).

5. Communication system according to Claim 4, **characterized in that** the decision sub-domain (22) comprises at least one item of avionics equipment (24a,..., 24i) configured to:
- acquire information received from the communication domain (30);
- determine transformed information as a function of the information received from the communication domain;
- transmit the transformed information to the operational sub-domain (26).

6. Communication system according to Claim 5, **characterized in that** said at least one item of avionics equipment is configured to acquire all of the information received from the communication domain (30) and intended to be transmitted to the operational sub-domain (26), in order to determine the information transformed as a function of said information received from the communication domain and to transmit, to the operational sub-domain (26), the transformed information while excluding all non-transformed information received from the communication domain (30).

7. Communication system according to any one of Claims 4 to 6, **characterized in that** the item of avionics equipment of which a function is configured to carry out said semantic analysis is an item of avionics equipment (24a,..., 24i) of the decision sub-domain (22), and **in that** said function (Fd1,..., Fdi) is a function of strategic management of the aircraft, configured to transmit, to the operational sub-domain (26), only information accepted during the semantic analysis.

8. Communication system according to any one of Claims 4 to 6, **characterized in that** the item of avionics equipment of which a function is configured to carry out said semantic analysis is an item of avionics equipment (28a,..., 28k) of the operational sub-domain, and said function (Fo1,..., Fok) is a function of tactical management of the aircraft, configured such that, when computing operational commands for the aircraft, it does not use the information rejected during the semantic analysis.

9. Communication system according to any one of the preceding claims, **characterized in that** it further comprises a so-called environment domain (40) to which are connected information sources (42a, 42b) of the aircraft of the radio navigation type, this environment domain being connected to the avionics domain (20), and **in that** the communication system comprises a barrier (18) of the second type arranged to filter the information transmitted from the environment domain to the avionics domain, this barrier of the second type being configured to carry out syntactic filtering (18a) and/or semantic filtering (18b) of said information transmitted from the environment domain (40) to the avionics domain (20).

10. Communication system according to any one of the preceding claims, **characterized in that** it further comprises a so-called passenger domain (60), of which the security level is lower than the security level of the communication domain (30) and to which are connected interfaces intended for connecting passenger electronic equipment in the cabin of the aircraft, the passenger domain (60) being connected to the communication domain (30) by a barrier (15) of the first type, this barrier being configured to allow information coming from the passenger domain (60) to pass into the communication domain (30) only if it corresponds to an authenticated communication.

11. Communication system according to any one of the preceding claims, **characterized in that** it further comprises a so-called free domain (50), to which is connected aircraft equipment carrying out functions that have no impact on the safety of the aircraft, the free domain (50) being connected to the communication domain (30) by a barrier (14) of the first type, this barrier being configured to allow information coming from the free domain to pass into the communication domain (30) only if it corresponds to an authenticated communication.

12. Communication method for an aircraft (1) comprising a communication system (10), the communication system comprising a communication interface (32a, 32b, 32c) with the outside of the aircraft and an avionics domain (20) of which the security level is the highest of the communication system, such that, the communication system comprising a so-called communication domain (30) to which is connected said communication interface and of which the security level is lower than the security level of the avionics domain, the method comprises the following steps:
- filter the information coming from the communication interface by means of a barrier (12a, 12b) of a first type of the communication system, this barrier of a first type being an authentication barrier configured to allow said information to pass into the communication domain (30) only if it corresponds to an authenticated communication; and
- filter information transmitted from the communication domain (30) to the avionics domain (20) by means of a barrier (16) of a second type configured to carry out at least a syntactic filtering (16a) of said information transmitted from the communication domain to the avionics domain,
**characterized in that** it further comprises a step of semantic analysis of information received by a function (Fd1,..., Fdi, Fo1,..., Fok) for navigation of the aircraft of an aircraft flight management system (24a,..., 24i, 28a,..., 28k) of the avionics domain, this semantic analysis corresponding to acceptance of the information received by the navigation function if an effect of the received information, on the flight of the aircraft, is compatible with a context of the aircraft or to a rejection of said information received by said navigation function if the effect of the received information, on the flight of the aircraft, is incompatible with the context of the aircraft.

13. Aircraft (1), **characterized in that** it comprises a communication system (10) according to any one of Claims 1 to 11.
